(19) Europäisches Patentamt
European Patent Office
Office européen des brevets

(11) **EP 0 999 445 A2**

(12) **EUROPEAN PATENT APPLICATION**

(43) Date of publication:
**10.05.2000 Bulletin 2000/19**

(51) Int. Cl.⁷: **G01N 29/16**

(21) Application number: **99119789.8**

(22) Date of filing: **06.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.10.1998 JP 30041598**

(71) Applicants:
• **OpenHeart Ltd.**
**Tokyo (JP)**

• **A Limited Responsibility Company Research Network**
**Higashiyama-ku, Kyoto (JP)**

(72) Inventor:
**Kobayashi, Wataru,**
**c/o OpenHeart Ltd.**
**Tokyo (JP)**

(74) Representative:
**Zinnecker, Armin, Dipl.-Ing. et al**
**Lorenz-Seidler-Gossel,**
**Widenmayerstrasse 23**
**80538 München (DE)**

(54) **Method for detecting foreign matter in medium using ultrasonic waves**

(57) This invention intends to provide a method for inspecting an inner state of an object by determining whether or not any foreign matter is generated inside the object material without being affected by any outside state of the object. This method comprises irradiating waveform of ultrasonic wave to an object whose inner state is desired to be inspected from outside, extracting waveform of a reflected wave traveling inside the object, detecting a difference of acoustic impedance of the foreign matter from the waveform of the reflected wave by extracting a deflection of the waveform and detecting for presence/absence of the foreign matter inside the object or presence/absence of the foreign matter and a quantity of the foreign matter.

FIG.1

ECHO BY HYDROGEN COMPOUND

EP 0 999 445 A2

**Description**

BACKGROUND OF THE INVENTION

1. Field of the Invention

The present invention relates to a method for accurately detecting an existence of a foreign matter generated in material (medium) which is homogeneous initially with a passage of time and an existence of a foreign matter which cannot be visually recognized from outside in a non-destructive method.

2. Description of the Related Art

It has been well known that if metallic material such as alloy material for use in industrial part, equipment part or the like, preliminarily adjusted to homogeneous state and formed in a predetermined shape like a rod, sheet or the like is immersed in water during use, hydrogen compound is generated gradually in the composition of that material.
Further, it has been known that hydrogen compound generated in the composition of such a metallic material makes the material brittle. If whether or not hydrogen compound is generated in metallic material on use or how much hydrogen compound is generated can be detected accurately, it is possible to prevent destruction due to brittleness. However, detection for an existence of the hydrogen compound has been recognized to be impossible by a conventional method based on non-destructive inspection using ultrasonic wave, because of an influence of oxide film generated on a surface of metallic material by such a foreign matter and because the size and mass of the generated hydrogen compound are small.

SUMMARY OF THE INVENTION

In the conventional non-destructive inspection using a non-contact means such as ultrasonic wave, if the surface condition of an inspection object is not homogeneous, whether or not an inner state of the material is still homogeneous like an initial state or whether or not any foreign matter is generated so that the material state is changed cannot be determined. Accordingly, in views of this problem, the present invention intends to provide a method for inspecting an inner state of an object by determining whether or not any foreign matter is generated in an inner structure of the material regardless of the outer surface condition of the object.
To achieve the above object, the present invention provides a method for non-destructive detection for foreign matter in medium using waveform of ultrasonic wave, comprising: irradiating waveform of ultrasonic wave to an object whose inner state is desired to be inspected from outside; extracting waveform of a reflected wave traveling inside the object; detecting a difference of acoustic impedance of the foreign matter from the waveform of the reflected wave by extracting a deflection of the waveform; and detecting for presence/absence of the foreign matter inside the object or presence/absence of the foreign matter and a quantity of the foreign matter.
According to the present invention, the waveform of the reflected wave is processed by the processing portion composed of mainly the waveform filter so as to make the feature of an extracted waveform appear explicitly. Further, the deflection of the phase is converted to numeric value according to the waveform processed by the processing portion and then a quantity of the foreign matter is quantified according to this numeric value so as to detect an existence of the foreign matter.

BRIEF DESCRIPTION OF THE DRAWINGS

Fig. 1 is a schematic view of a section of an alloy wall which is a test piece, as an example of application of the present invention;
Fig. 2 is a wave form diagram showing schematically a reflection wave form of a high frequency ultrasonic wave generated in a section of a test piece of Fig. 1;
Fig. 3 is a wave form diagram showing an example of a reflection wave form of ultrasonic wave projected to a different test piece;
Fig. 4 is a wave form diagram showing an example of a reflection wave form of ultrasonic wave projected to a different test piece;
Fig. 5 is a schematic diagram showing a relation between a density (particle density) of medium and sound pressure; and
Fig. 6 is a schematic wave form diagram showing schematically a deflection of phase obtained according to the present invention.

## DESCRIPTION OF THE PREFERRED EMBODIMENTS

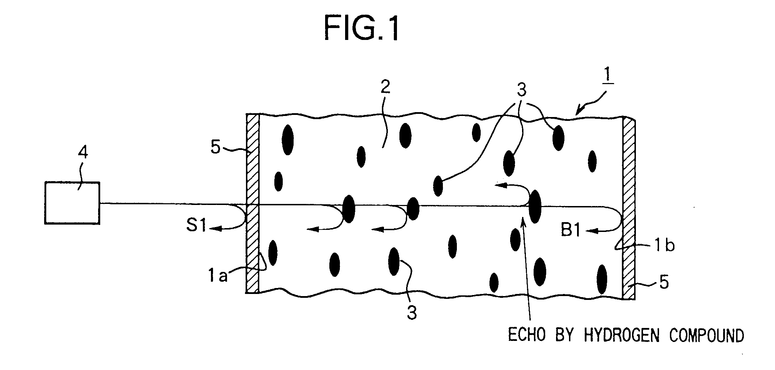

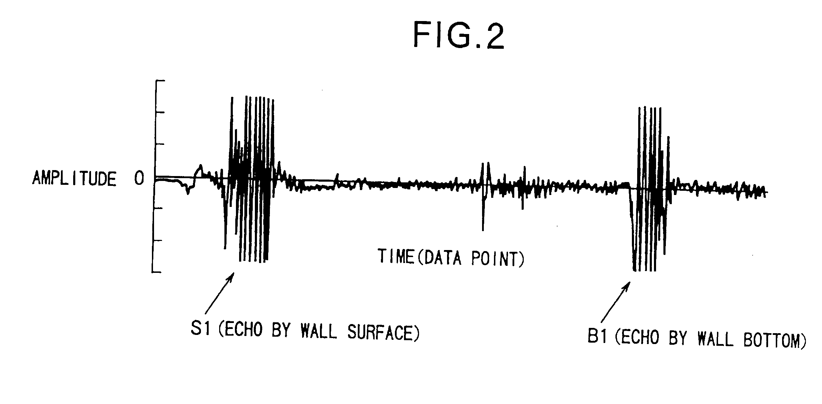

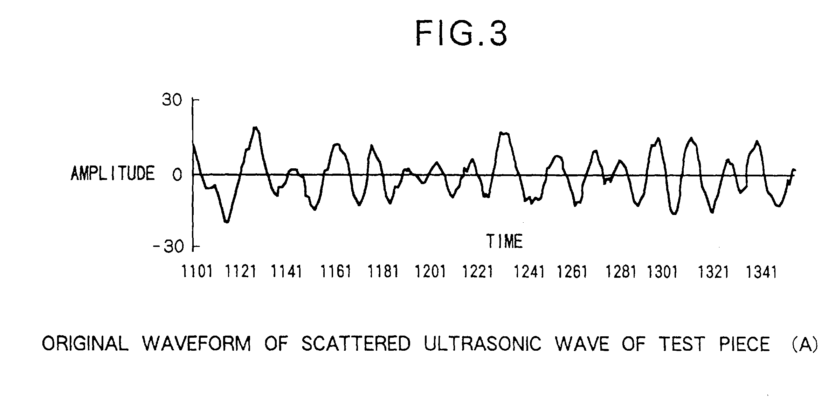

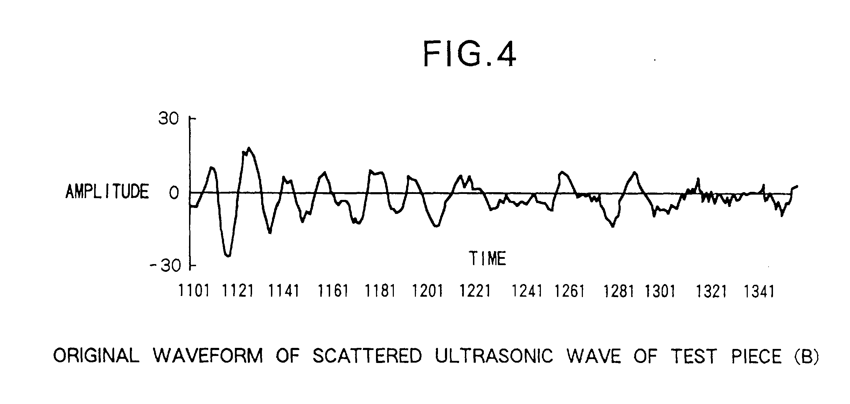

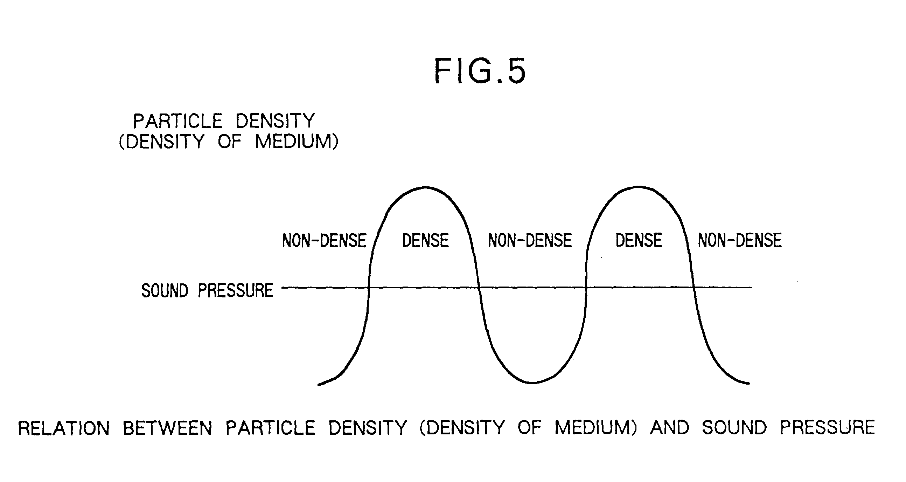

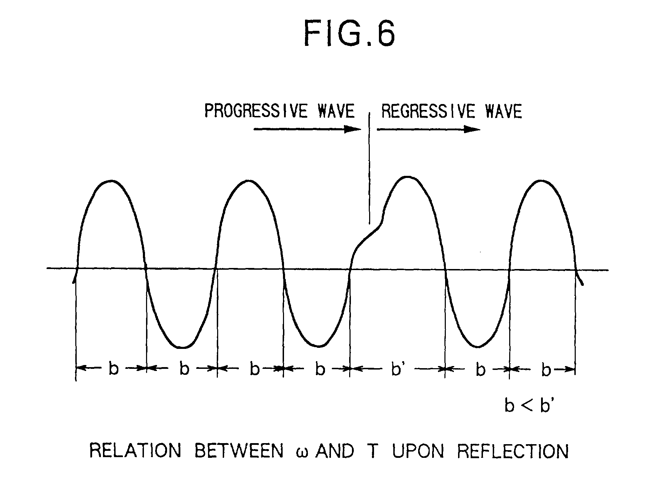

An embodiment of the present invention will be described with the accompanying drawings. Fig. 1 is a schematic view of a section of an alloy wall which is a test piece, as an example of application of the present invention. Fig. 2 is a wave form diagram showing schematically a reflection wave form of a high frequency ultrasonic wave generated in a section of a test piece of Fig. 1. Fig. 3, 4 are a wave form diagram showing an example of a reflection wave form of ultrasonic wave projected to a different test piece. Fig. 5 is a schematic diagram showing a relation between a density (grain density) of a medium and sound pressure. Fig. 6 is a schematic wave form diagram showing schematically a deflection of phase obtained according to the present invention.

Assuming that, for example, an alloy wall body adjusted to a homogeneous state shown in Fig. 1 is provided as a test piece 1, and impurity 3 (or foreign matter 3) or hydrogen compound in this case, exists in medium 2 such that it is incontinous therein, the present invention intends to make clear a correlation between a quantity of the impurity 3 and quantity of irregular reflection of ultrasonic wave from standpoint of transient phenomena.

If the medium 2 is even, reflection is generated evenly so that no conceivable phenomenon is found in its observation result on the change of a waveform of a reflected ultrasonic wave. However, if the impurity 3 is generated inside the medium 2 such that it is not continuous, there is generated a difference in the waveform of the reflected wave depending on a frequency of reflections on the impurity 3 as the incontinuous point and diffracting interference. Thus, quantifying the quantity of the impurity 3 in the medium 2 by observing this difference is a basic standpoint of the present invention.

However, even if a change of the difference in the waveform of the reflected wave is graphed by processing based on fast Fourier transformation method like the conventional method, the aforementioned change does not always appear on the positive side because that change is a minute change which always moves in a cycle of the fast Fourier transformation computation and due to Haworth effect by irradiated wave and its reflection wave of high-frequency ultrasonic wave going in the medium. Thus, the change in the waveform of the reflected wave is very difficult to observe.

In views of the above problem, the present invention intends to grasp a change of the frequency as a deflection of the phase of the waveform of the reflected wave so as to observe the change of the frequency in a minute time interval and then convert this change to numeric values. Because, according to the present invention, a change of the frequency in the waveform of a reflected wave or its deflection is manifested and observed, a filter characteristic is set up corresponding to a deflecting band and then a motion of zero crossing of a waveform extracted through a filter is defined as a deflection of the frequency in the waveform of the reflected wave. By graphing how much deflection component is contained in the waveform of the reflected wave after passing the filter by using standard deviation system and observing its change, whether or not the impurity exists in a constant medium and how much impurity is contained therein are determined. Therefore, according to the present invention, the waveform of a reflected wave of an irradiated high-frequency ultrasonic wave is subjected to digital signal processing and setting on a filter condition in that processing is indispensable to manifest the deflection in the waveform of the reflected wave.

Referring to Fig. 1, a pulse-like ultrasonic wave is generated to the test piece 1 from a ultrasonic generator 4. This waveform is reflected irregularly by an oxide film 5 on an outer surface 1a of the wall of the test piece 1, hydrogen compound 3 and an inner surface 1b of the wall so that those reflected waves are synthesized, and as a result, waveform continuous with respect to a time axis is detected as shown in Fig. 2. As the high-frequency cycle, for example, a cycle of 80 MHz-100 MHz is used.

A waveform shown in Fig. 3 is obtained from a test piece (a) in which some extent of the hydrogen compound 3 is contained in the medium (wall) and a waveform shown in Fig. 4 is obtained from another test piece (b) containing more hydrogen compound 3 than the aforementioned test piece (a). As evident from both, the more hydrogen compound is contained, the larger the deflection of the waveform is and correspondingly, the deflection of zero crossing interval becomes larger. That is, the ultrasonic wave is reflected irregularly by the hydrogen compound and it is made evident that the content ratio of the hydrogen compound is proportional to a quantity of the irregular reflection of the ultrasonic wave.

From the above, the following matter can be considered.

If when sound wave travels in a homogeneous medium, there is an impurity or foreign matter which acts as incontinuous points in the medium and the incontinuous points have changes in acoustic impedance sufficient for the sound wave, a reflection of the sound wave occurs at that incontinuous point. This reflected sound wave is accompanied by a deflection in phase relative to a reflected sound wave which does not pass the incontinuous point. The reason is that viscosity and inertia of the medium produce a minute spring constant, which produces a deflection in the reflection phase of the sound wave. However, this phase deflection is converged within a wave length of a basic cycle when the number of reflections is small, so that it hardly appears as a change of the cycle but appears as a deflection of the zero crossing position. If the number of reflections increases, the deflection of the zero crossing position (deflection of the phase) becomes violent.

The reason why the deflection of the phase occurs is that if there is a difference in acoustic impedance between the medium and impurity particle in the medium (hydrogen compound in this example), the minute time necessary for the reflection differs. Depending on whether the acceleration of the particle is positive or negative, the reflecting time is different. Although that difference can be considered as a deflection of the phase, it cannot be grasped as a deviation of the cycle because the positive and negative compensate for each other.

Thus, as compared to a waveform of the reflected wave directly returning from the inner surface 1b of the wall of the test piece 1 shown in Fig. 1, the waveform of an irregularly reflected component by the impurity 3 (hydrogen compound) has a larger deflection of the phase. If the amount of that deflection is extracted, it can be considered that the content of the impurity or hydrogen compound in this case can be estimated.

Although there is oxide film 5, clad and roughness on the surface of the test piece 1, because the thickness of the wall is much far larger than thickness of each thereof, according to the present invention, it is considered that a reflected wave of ultrasonic wave reflected by the oxide film 5, clad or roughness of the surface appears on the time axis in a shorter time than the reflected wave by the inner surface of the wall. Therefore, it has been considered that an influence thereof can be neglected.

Because the method of the present invention can be testified by a change of particle density due to sound pressure of ultrasonic wave traveling in the medium, this point will be described below.

When sound wave travels in a medium, a change of density occurs in that medium as shown schematically in Fig. 5. That is, a change of the density is repeated with a cycle of sound wave such that the density of the medium is intensified in a portion having a high sound pressure and the density thereof becomes weak at a portion having a low sound pressure. Now, assuming that the density of a medium is $\rho$, a mass of a unit area $\Delta x$ as a minute portion of medium perpendicular to $\chi$ direction which is a traveling direction of sound wave is $\rho \cdot \Delta x$.

Next, if the aforementioned $\rho \cdot \Delta x$ is substituted for mass m of Newton's equation of motion, $F = m \cdot a = m \cdot d^2 x/dt^2$,

$$F = m \cdot a = m \cdot \partial^2 u/\partial t^2 = (\rho \cdot \Delta x) \cdot \partial^2 u/\partial t^2 = P \cdot \partial^2 u(x) = \partial x^2 \cdot \Delta x$$

where u is an amount of deflection of medium and P is static pressure in the medium.

If both sides of the aforementioned expression is divided by $\Delta x$, $\rho \cdot \partial^2 u/\partial t^2 = P \cdot \partial^2 u/\partial x^2$. If $P/\rho = c$ is placed, $\partial^2 u/\partial t^2 = \partial^2 u/\partial x^2$. Where c is sound velocity and this expression is first-order wave equation.

Next, if the above wave equation is solved using angular frequency $\omega = 2\pi f$, a general solution shown in Expression 1 is obtained.

$$u(x,t) = Ae^{-j(kx-\omega t)} + Be^{j(kx+\omega t)} \qquad \text{[Expression 1]}$$

where $k = 2\pi\lambda$, $\lambda$ is wave length of sound wave and A, B are arbitrary constants.

Because $E = \rho v$ when a particle velocity of medium is assumed to be v, sound pressure E of the sound wave can be obtained if the particle velocity v is determined. Because a general solution of the aforementioned wave equation expresses a deflection (distance) of the medium, the particle velocity of the medium can be introduced by differentiating this equation by t.

Therefore, the sound pressure E of the sound wave is expressed as shown in Expression 2.

$$E = \rho \cdot v = \rho \cdot du/dt = j\omega\rho\{Ae^{-j(kx-\omega t)} + Be^{j(kx+\omega t)}\} \qquad \text{[Expression 2]}$$

The first term of this expression expresses progressive wave and the second term expresses regressive wave.

If the medium is uniform, its change occurs relatively evenly and therefore it does not appear as a conceivable observation result. If there are incontinuous points in the medium, it is assumed that reflection does not occur at the incontinuous points and there occurs a difference in the observation result depending on the frequency of reflections.

Considering an influence by the inertia of the particle upon reflection, an apparent velocity of a particle colliding with the incontinuous point in the medium drops due to spring constant (Young's modulus of elasticity) of the medium when the direction of its force is changed by the reflection.

Therefore, when the sound wave is reflected, $\omega$ is retarded relative to t. Fig. 6 shows a change of the sound pressure by an influence of the spring constant upon reflection.

Although such an ideal waveform is not seen in actual waveform because of multiple reflections, an entire tendency of the waveform can be grasped with this Figure.

Because the Expression 3 is obtained if this is applied to the aforementioned expression, it is made evident that when the sound wave is reflected, apparently the frequency is lowered. Thus, as the irregular reflection increases, the number of reflected waves whose frequency is deflected increases.

$$E = j\omega\rho\{Ae^{-j(kx-(\omega-n)t)} + Be^{j(kx + (\omega+n)t)}\}$$ [Expression 3]

However, this transient phenomenon upon reflection vanishes within a single cycle. Therefore, upon observation, it is necessary to see not a change of the frequency characteristic due to Fourier transformation but a tendency of a deflection of the phase of each cycle. Thus, the detection method of the present invention is effective.

As described above, the present invention comprises: irradiating waveform of ultrasonic wave to an object whose inner state is desired to be inspected from outside; extracting waveform of a reflected wave traveling inside the object; detecting a difference of acoustic impedance of the foreign matter from the waveform of the reflected wave by extracting a deflection of the waveform; and detecting for presence/absence of the foreign matter inside the object or presence/absence of the foreign matter and a quantity of the foreign matter. As a result, a foreign matter generated in a homogeneous medium, which cannot be found by a conventional non-destructive detection method using ultrasonic wave, can be detected accurately even if it is minute or the quantity thereof is small.

**Claims**

1. A method for non-destructive detection for foreign matter in medium using waveform of ultrasonic wave, comprising:

   irradiating waveform of ultrasonic wave to an object whose inner state is desired to be inspected from outside;
   extracting waveform of a reflected wave traveling inside the object;
   detecting a difference of acoustic impedance of the foreign matter from the waveform of the reflected wave by extracting a deflection of the waveform; and
   detecting for presence/absence of the foreign matter inside the object or presence/absence of the foreign matter and a quantity of the foreign matter.

2. A method for non-destructive detection for foreign matter in medium using waveform of ultrasonic wave according to claim 1 wherein the waveform of the reflected wave is processed via a processing portion composed of mainly a waveform filter, a feature of the deflection of the phase of the waveform is extracted from the waveform processed in said processing portion and a degree of the deflection and a quantity of the foreign matter in the medium are quantified.

3. A method for non-destructive detection for foreign matter in medium using waveform of ultrasonic wave according to claim 2 wherein for the feature and degree of the deflection of the phase, an interval of zero crossing points of the reflected wave is extracted so as to convert a standard deviation thereof to numeric value and a quantity of the foreign matter in the medium and a size of the foreign matter is quantified based on said numeric value.

4. A method for non-destructive detection for foreign matter in medium using waveform of ultrasonic wave according to claim 1-3 wherein a waveform of ultrasonic wave to be irradiated is high-frequency ultrasonic wave.

FIG.1

# FIG.2

AMPLITUDE  0

TIME(DATA POINT)

S1 (ECHO BY WALL SURFACE)

B1 (ECHO BY WALL BOTTOM)

EP 0 999 445 A2

# FIG.3

ORIGINAL WAVEFORM OF SCATTERED ULTRASONIC WAVE OF TEST PIECE (A)

EP 0 999 445 A2

# FIG.4

ORIGINAL WAVEFORM OF SCATTERED ULTRASONIC WAVE OF TEST PIECE (B)

EP 0 999 445 A2

# FIG.5

PARTICLE DENSITY
(DENSITY OF MEDIUM)

NON-DENSE   DENSE   NON-DENSE   DENSE   NON-DENSE

SOUND PRESSURE

RELATION BETWEEN PARTICLE DENSITY (DENSITY OF MEDIUM) AND SOUND PRESSURE

EP 0 999 445 A2

# FIG.6

EP 0 999 445 A2

PROGRESSIVE WAVE | REGRESSIVE WAVE

b < b'

RELATION BETWEEN ω AND T UPON REFLECTION